# EUROPEAN PATENT APPLICATION

(11) **EP 2 378 357 A1**
(43) Date of publication of application: **19.10.2011**
(21) Application number: 09832937.8
(22) Date of filing: 16.12.2009
(51) Int. Cl.: G03B 27/52, G03B 27/32

(54) **APPARATUS FOR MOVING STEREO IMAGING LENS AND METHOD FOR DIGITAL STEREO PROJECTION**

(30) Priority: 17.12.2008 CN 200810204799
(71) Applicant: Shanghai Yiying Digital Technology Co., Ltd., Shanghai 200237 (CN)
(72) Inventor: Shanghai Yiying Digital Technology Co., Ltd., Shanghai 200237 (CN)
(74) Representative: Clegg, Richard Ian
(86) International application number: PCT/CN2009/075655
(87) International publication number: WO 2010/069255

(57) **Abstract**

An apparatus for moving a stereo imaging lens, includes: a baseplate(1), a LCD displayer (15) for display an image source, a light source device (4) above the LCD displayer (15), and a lens (5) positioned under the LCD displayer (15). A display surface of the LCD displayer (15) is downwardly embedded into a fixing board (3) horizontally mounted on the baseplate (1). The light source device (4) is mounted on the fixing board (3). The lens (5) is embedded in a lens fixing board (10). The lens fixing board (10) is mounted on the baseplate (1) via a sliding device. The present invention further provides a method for digital stereo projection, the image source obtained by digital devices can be processed for stereopictures with the LCD displayer (15) as display device, and thus has high sensitization accuracy. The focus of the lens (5) according to the present invention can be adjusted by the rail (9) in vertical direction, so as to change the image size, and increase the image effect and size of the stereopictures.

## Description

### Background of the Present Invention

### Field of Invention

The present invention relates to an apparatus for moving stereo imaging lens and a method for digital stereo projection.

### Description of Related Arts

Nowadays, most enlarging-printing devices for digital pictures are for planar photos. There is still blank in developing devices for digital stereopicture in the market. Even the few digital stereopictures in the market are imitated stereopictures which are processed with digital stereopicture software, output by the printer and then combined with the grating. This kind of digital stereopictures have not been widely accepted by people or popularized due to high technical requirement, complicated operation, time and work consuming, and overcolored pictures produced.

### Summary of the Present Invention

### Technical problem

A technical problem to be solved by the present invention is to overcome the drawback in the prior art that a developing device for digital stereopicture is lacked and lenses move inconveniently when stereo projection, and provide an apparatus for moving stereo imaging lens and a method for digital stereo projection.

### Technical proposal

In order to solve the technical problem, the present invention provides:

An apparatus for moving a stereo imaging lens, which is characterized in, comprising:
a vertical baseplate;
a LCD displayer for display an image source, wherein a display surface of the LCD displayer is downwardly embedded into a fixing board horizontally mounted on the baseplate;
a light source device mounted on the fixing board and above the LCD displayer; and
a lens positioned under the LCD displayer, wherein the lens is embedded into a lens fixing board mounted slidably and horizontally on the baseplate via a sliding device.

Preferably, the light source device comprises a light mixing canister perpendicularly mounted on the fixing board and a light source element positioned on an upper end of the light mixing canister, wherein the LCD displayer is positioned right under the light mixing canister, two ends of the light mixing canister are respectively closed by the light source element and an upper surface of the fixing board.

Preferably, the sliding device comprises a sliding board having an upper end connected with the lens, a sliding block is fixedly mounted on a side of the sliding board opposite to the baseboard, a guide screw adapted to the sliding block is mounted horizontally on the baseplate, an end of the guide screw is connected with an output end of an electromotor.

Preferably, a sliding rail parallel to the guide screw is mounted on the baseplate and aside the guide screw, a convex portion adapted to the sliding rail is provided at a position corresponding to the sliding rail on the sliding board.

Preferably, at least a protuberance is mounted on a side of the lens fixing board opposite to the sliding board, a vertical rail adapted to the protuberance is provided on the sliding board.

The present invention further provides a method for digital stereo projection with the apparatus for moving a stereo imaging lens, which is characterized in, comprising the following steps:
S1: displaying a first photo with the LCD displayer, wherein the lens is under the LCD displayer, and turning on the light source device to process a first projection and sensitization;
S2: switching to a second photo by a computer, the lens moves for a certain distance in a horizontal plane from a previous position, moving a sensitization platform synchronously along a direction the lens moves, until a light cast through the lens covers the whole surface of a photosensitive material again;
S3: tuning on the light source device to process a second projection and sensitization to the photosensitive material; and
S4: repeating the steps S2 and S3, until all photos are processed for projection and sensitization.

Preferably, the method further comprises a step of: taking photos of a same scene from different views before the step S1.

Preferably, the direction the lens moves is a rotating direction of a camera when taking a photo for a present projection and sensitization process with respect to the camera when taking a photo for a previous projection and sensitization process.

Preferably, the method further comprises a step of: developing the photosensitive material after the step S4.

### Beneficial effect

The positive beneficial effect of the present invention is as follows. The apparatus for moving a stereo imaging lens has simple structure, convenient operation, is capable of moving for projection and sensitization for multiple times. In addition, the LCD displayer is adopted to be the display device, so that the image source obtained by digital devices can be processed for stereopictures, and thus has high sensitization accuracy. Furthermore, the focus of the lens according to the present invention can be adjusted by the rail in vertical direction, so as to change the image size, and increase the image effect and size of the stereopictures.

### Brief Description of the Drawings

Fig. 1 is a perspective view of an apparatus for moving a stereo imaging lens according to a preferred embodiment of the present invention.
Fig. 2 is a side view of the apparatus for moving the stereo imaging lens according to the preferred embodiment of the present invention.
Fig. 3 is a front view of the apparatus for moving the stereo imaging lens according to the preferred embodiment of the present invention.
Fig. 4 is a top view of the apparatus for moving the stereo imaging lens in Fig.3 without a light source device and a LCD displayer thereof.
Fig. 5 is a top view of the apparatus for moving the stereo imaging lens in Fig. 3 without the light source device thereon.

### Detailed Description of the Preferred Embodiment

A preferred embodiment of the present invention is described by accompanied with the drawing.

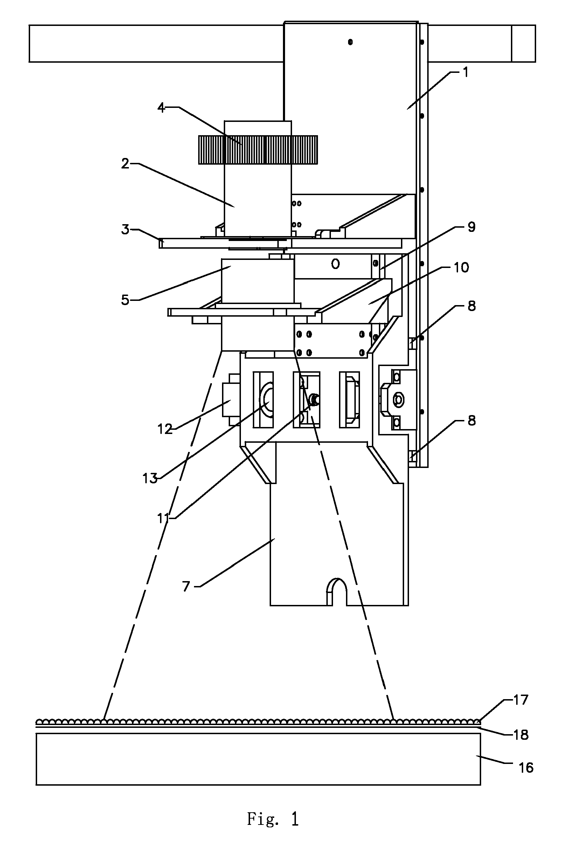

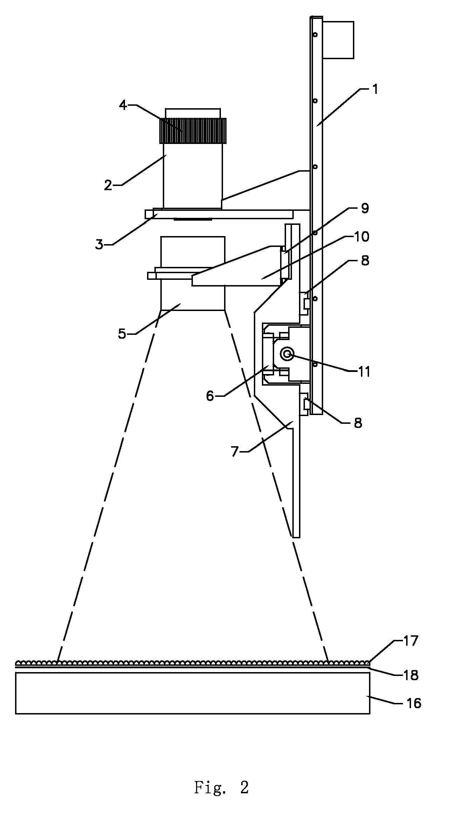

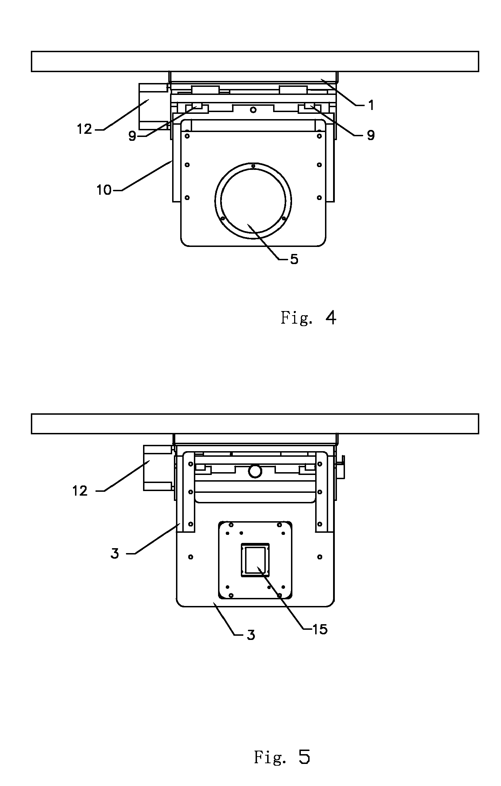

Referring to Fig. 1-3 of the drawings, an apparatus for moving a stereo imaging lens according to the present invention comprises a baseplate 1, a fixing board 3 fixed on a side of the baseplate 1, an LCD displayer 15 (as shown in Fig. 5) embedded in the fixing board 3 and connecting to a computer (not shown in the drawings), a light mixing canister 2 covering right above the LCD displayer 15, and a light source device positioned on an upper end of the light mixing canister 2. Herein, the light source device 4 and an upper surface of the fixing board 3 close two ends of the light mixing canister 2.

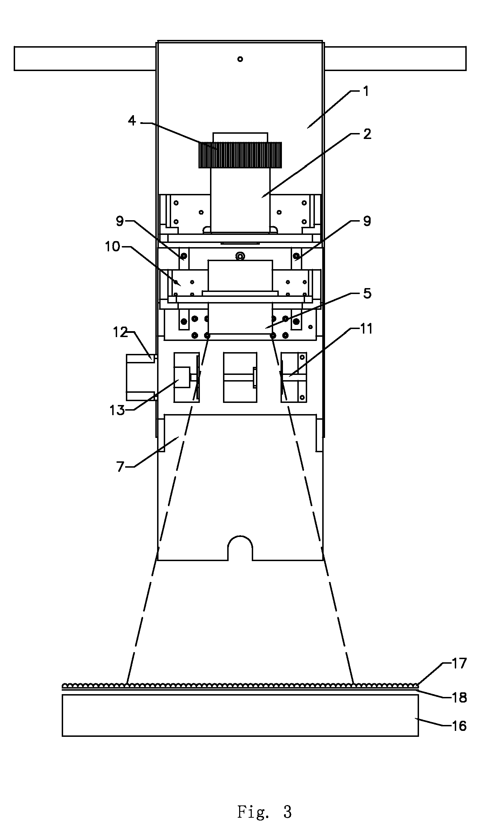

Referring to Fig. 3, a sliding board 7 is positioned on the baseplate 1, which is under the fixing board 3 and capable of moving horizontally with respect to the baseplate 1. A lens 5 is embedded in a lens fixing board 10 on an upper end of the sliding board 7. The lens fixing board 10 is connected to the upper end of the sliding board 7, in such a manner that when the sliding board 7 is in a middle position of the baseplate 1 (i.e., an initial status), the lens 5 is right under the LCD displayer 15. In the preferred embodiment of the present invention, the sliding board 7 and the baseplate 1 are slidably connected via a guide screw unit 11 provided horizontally. A sliding block 6 is fixedly mounted on the sliding board 7, and cooperates with the guide screw unit 11 mounted on the corresponding position of the baseplate 1 to move the sliding board 7. The guiding screw unit 11 has an end connected to an output shaft of an electromotor 12 via a coupler 13. Preferably, for moving the sliding board more smoothly, an adapted sliding rail 8 is mounted between the sliding board 7 and the baseplate 1. The present invention does not further limit the mechanism to move the sliding board 7, any mechanism to accomplish moving the sliding board 7 with respect to the baseplate 1 horizontally in the prior art can be utilized by people skilled in the art to replace the guide screw unit 11 in the present invention, e.g. gearing or chains.

Preferably, the lens fixing board 10 is slidably provided on the sliding board 7, and has a protuberance , and the sliding board 7 has a vertical sliding rail 9 adapted to the protuberance. During projection and sensitization, the lens fixing board 10 is adjusted to change a focus of the lens 5.

A method for digital stereo projection with the above apparatus for moving a stereo imaging lens is further described below.

Firstly, to describe more clearly, three photos to be used is described herein. A first photo is taken by a camera in front of an object, a second photo is taken by the camera after turning left around the object for 5 degrees from the front thereof, and a third photo is taken by the camera after turning right around the object for 5 degrees from the front thereof.

Secondly, the left or right direction is based on the front of the object.
S1: displaying the first photo with the LCD displayer 15, wherein the lens 5 is right under the LCD displayer 15, when three-colored light cast by the light source device 4 reaches to the lens 5 via the LCD displayer 15 after being mixed by the light mixing canister 2, the first photo on the LCD displayer 15 is processed for projection and sensitization on a photosensitive material 18 through the lens 5 and a grating 17, to finish a first projection and sensitization;
S2: switching to the second photo by the computer, the electromotor 12 drives the lens 5 to move leftwardly and horizontally for a certain distance, wherein a sensitization platform 16 synchronously moves along a direction the lens 5 moves, until a light cast through the lens 5 covers the whole area of the photosensitive material 18 again;
S3: processing a second projection and sensitization to the photosensitive material 18, which is same to the step S1;
S4: switching to the third photo by the computer, the electromotor 12 drives the lens 5 to move rightwardly and horizontally for a certain distance, wherein the sensitization platform 16 synchronously moves along a direction the lens 5 moves, until a light cast through the lens 5 covers the whole area of the photosensitive material 18 again;
S5: processing a third projection and sensitization to the photosensitive material 18, which is same to the step S1; and
S6: developing the photosensitive material 18.

It is worth mentioning that, a projection and sensitization order of photos of different views can be changed freely, not limit to the above preferred embodiment.

One skilled in the art will understand that the embodiment of the present invention as shown in the drawings and described above is exemplary only and not intended to be limiting.

It will thus be seen that the objects of the present invention have been fully and effectively accomplished. Its embodiments have been shown and described for the purposes of illustrating the functional and structural principles of the present invention and is subject to change without departure from such principles. Therefore, this invention includes all modifications encompassed within the spirit and scope of the following claims.

## Claims

1. An apparatus for moving a stereo imaging lens, which is **characterized in**:
a vertical baseplate;
a LCD displayer for display an image source, wherein a display surface of said LCD displayer is downwardly embedded into a fixing board horizontally mounted on said baseplate;
a light source device mounted on said fixing board and above said LCD displayer; and
a lens positioned under said LCD displayer, wherein said lens is embedded into a lens fixing board mounted slidably and horizontally on said baseplate via a sliding device.

2. The apparatus for moving said stereo imaging lens, as recited in claim 1, which is **characterized in that**, said light source device comprises a light mixing canister perpendicularly mounted on said fixing board and a light source element positioned on an upper end of said light mixing canister, wherein said LCD displayer is positioned right under said light mixing canister, and two ends of said light mixing canister are respectively closed by said light source element and an upper surface of said fixing board.

3. The apparatus for moving said stereo imaging lens, as recited in claim 1, which is **characterized in that**, said sliding device comprises a sliding board having an upper end connected with said lens, a sliding block is fixedly mounted on a side of said sliding board opposite to said baseplate, a guide screw adapted to said sliding block is mounted horizontally on said baseplate, and an end of said guide screw is connected with an output end of an electromotor.

4. The apparatus for moving said stereo imaging lens, as recited in claim 3, which is **characterized in that**, a sliding rail parallel to said guide screw is mounted on said baseplate and aside said guide screw, and a convex portion adapted to said sliding rail is provided at a position corresponding to said sliding rail on said sliding board.

5. The apparatus for moving said stereo imaging lens, as recited in claim 3 or 4, which is **characterized in that**, at least a protuberance is mounted on a side of said lens fixing board opposite to said sliding board, and a vertical rail adapted to said protuberance is provided on said sliding board.

6. A method for digital stereo projection with the apparatus for moving the stereo imaging lens, as recited in claim 1, which is **characterized in**, comprising the following steps:
S1: displaying a first photo with the LCD displayer, wherein the lens is under the LCD displayer, and turning on the light source device to process a first projection and sensitization;
S2: switching to a second photo by a computer, the lens moves for a certain distance in a horizontal plane from a previous position, moving a sensitization platform synchronously along a direction the lens moves, until a light cast through the lens covers the whole surface of a photosensitive material again;
S3: tuning on the light source device to process a second projection and sensitization to the photosensitive material; and
S4: repeating the steps S2 and S3, until all photos are processed for projection and sensitization.

7. The method for digital stereo projection, as recited in claim 1, which is **characterized in that**, the method further comprises a step of: taking photos of a same scene from different views before the step S 1.

8. The method for digital stereo projection, as recited in claim 1, which is **characterized in that**, the direction the lens moves is a rotating direction of a camera when taking a photo for a present projection and sensitization process with respect to the camera when taking a photo for a previous projection and sensitization process.

9. The method for digital stereo projection, as recited in claim 1, which is **characterized in that**, the method further comprises a step of: developing the photosensitive material after the step S4.
